# EUROPEAN PATENT APPLICATION

(11) **EP 4 682 614 A1**
(43) Date of publication of application: **21.01.2026**
(21) Application number: 25782819.4
(22) Date of filing: 19.03.2025
(51) Int. Cl.: G02B 21/36, G02B 21/34

(54) **SLIDE IMAGE OBTAINING APPARATUS AND METHOD**

(30) Priority: 03.04.2024 KR 20240045278
(71) Applicant: Vieworks Co., Ltd., Anyang-si, Gyeonggi-do 14055 (KR)
(72) Inventor: YANG, Hee Woong, Incheon 21976 (KR); JIN, Min Gyu, Seoul 01427 (KR)
(74) Representative: BCKIP Part mbB
(86) International application number: PCT/KR2025/003572
(87) International publication number: WO 2025/211616

(57) **Abstract**

The present disclosure provides a slide image acquisition apparatus including a stage on which a slide with a sample loaded thereon is mounted, a lens which receives light from the sample, a beam splitter which splits the light incident through the lens into at least two to transmit the split light, at least two image sensor units which acquire images of the sample in different focal positions from light transmitted from the beam splitter, with respect to each field of view (FOV) for the sample, and an image generator which generates a stitching target image using at least two images at each FOV generated by the image sensor unit and generates a composite image by composing the stitching target images at the plurality of FOVs.

## Description

### BACKGROUND

### Technical Field

The present disclosure relates to a slide image acquisition apparatus and method for acquiring an image of a sample mounted on a slide.

### Description of the Related Art

A scan device which is used in conjunction with a microscope has been known. For example, a slide scanner is a device which automatically scans slides on which a tissue sample to be inspected is loaded to store, observe and/or analyze the image and is used for acquiring images of the tissue sample in various preclinical experiments or pathological examinations.

A slide scanner captures a tissue of the slide at magnifications of tens to hundreds of times so that the image of the tissue is captured at a low field of view (FOV) and the captured image is stitched to generate a digital slide image (for example, a whole slide image (WSI).

Generally, a tissue sample for acquiring a digital slide image has a thickness of approximately 4 µm and a cell sample has a thickness of several tens of µm. Further, the depth of the sample located in the slide may vary.

When a tissue sample or a cell sample is captured, a depth of field (DOF) is very important for a quality of the captured image. The depth of field refers to a range of depth at which the focal point is clearly captured. For example, when the magnification of the objective lens is enlarged to 20 to 40 times, the depth of field of the objective lens is approximately 1 um, so that the depth of field is smaller than the thickness of the tissue sample. Accordingly, when the image for the sample is acquired at an accurate focal distance, the quality of the slide image may be improved.

However, it is not easy to acquire a focused image of the sample. When the images captured at a predetermined FOV are stitched under the capturing condition of the slide scanner to generate a digital slide image, such as the whole slide image, it is required to effectively adjust a focal distance of the objective lens during the consecutive capturing and effectively acquire the image in the focused position.

### SUMMARY

An object of the present disclosure is to provide a slide image acquisition apparatus and method which effectively adjust a focal distance in the consecutive capturing when a slide image for a sample mounted on the slide is acquired and acquire a slide image which is focused as a whole.

According to an aspect of the present disclosure, a slide image acquisition apparatus includes a stage on which a slide with a sample loaded thereon is mounted; a lens which receives light from the sample; a beam splitter which splits the light incident through the lens into at least two to transmit the split light; at least two image sensor units which acquire images of the sample in different focal positions from light transmitted from the beam splitter, with respect to each field of view (FOV) for the sample; and an image generator which generates a stitching target image using at least two images at each FOV generated by the image sensor unit and generates a composite image by composing the stitching target images at the plurality of FOVs. The image generator includes any one of a first mode of selecting any one of at least two images at any one FOV as the stitching target image and a second mode of dividing at least two images at any one FOV into block images and generating the stitching target image using the block images in the same position.

In one exemplary embodiment, in the first mode, the image generator calculates a focus evaluation value for at least two images at each FOV and selects an image with a higher focus evaluation value as the stitching target image.

In one exemplary embodiment, in the second mode, the image generator calculates a focus evaluation value for the block images in the same position at any one FOV, generates the stitching target block for the block images using the focus evaluation value, and fuses the stitching target blocks at the FOV to generate the stitching target image.

Further, the image generator determines a block image with a high focus evaluation value, among the block images, as the stitching target block.

Further, the image generator determines weights for the block images using the focus evaluation value for the block images and composes the block images using the weights to generate the stitching target block.

In one exemplary embodiment, whether to apply the first mode or the second mode is selected by a user or determined by a mark provided on the slide.

In one exemplary embodiment, the image generator applies the first mode to any one FOV, among the plurality of FOVs, and applies the second mode to the other FOV, to generate the stitching target image.

In one exemplary embodiment, the slide image acquisition apparatus further includes a main controller which controls operations of the stage, the objective lens, the image sensor unit, and the image generator. The main controller performs a pre-focus calculation step of calculating a focus distribution of the sample of the slide to acquire the image for the slide and in the focus calculation step, a focus evaluation value in a plurality of focal positions at any one FOV is calculated and whether to apply the first mode or the second mode is determined according to the difference of the focus evaluation values at the plurality of focal positions.

Further, the second mode is applied when a difference between a focus evaluation value in a focal position within a predetermined distance from a focal position having the highest focus evaluation value at the FOV and the highest focus evaluation value is within a predetermined range and the first mode is applied when a difference between a focus evaluation value in a focal position within a predetermined distance from a focal position having the highest focus evaluation value and the highest focus evaluation value is out of the predetermined range.

In one exemplary embodiment, the image generator generates a focus evaluation value for a plurality of images in different focal positions, acquired from any one of the plurality of FOVs and when the difference between the focus evaluation values of the plurality of images is within a predetermined range, the second mode is applied and when the difference between the focus evaluation values of the plurality of images is out of the predetermined range, the first mode is applied to generate the stitching target image.

Further, according to another object of the present disclosure, a slide image acquisition method of generating a digital slide image by composing images acquired at a plurality of fields of view (FOV) for a sample mounted on a slide, includes: (a) receiving a plurality of images at different focal positions for each FOV, by an image generator; (b) generating a stitching target image at each FOV using the plurality of images at each FOV, by the image generator; and (c) generating the digital slide image by composing the stitching target images, by the image generator. In the step (b), the image generator generates the stitching target image according to any one of a first mode of selecting any one of a plurality of images at any one FOV as the stitching target image and a second mode of dividing the plurality of images at any one FOV into block images and generating the stitching target image using the block images in the same position.

In one exemplary embodiment, in the first mode, the image generator calculates a focus evaluation value for at least two images at each FOV and selects an image with a higher focus evaluation value as the stitching target image.

In one exemplary embodiment, in the second mode, the image generator calculates a focus evaluation value for the block images in the same position at any one FOV, generates the stitching target block for the block images using the focus evaluation value, and fuses the stitching target blocks at the FOV to generate the stitching target image.

Further, the image generator determines a block image with a high focus evaluation value, among the block images, as the stitching target block.

In one exemplary embodiment, the image generator determines weights for the block images using the focus evaluation value for the block images and composes the block images using the weights to generate the stitching target block.

In one exemplary embodiment, prior to the step (a), a pre-focus calculation step of calculating a focus distribution of the sample of the slide is performed to acquire the image for the slide and in the focus calculation step, a focus evaluation value in a plurality of focal positions at any one FOV is calculated and in the step (b), whether to apply the first mode or the second mode is determined according to the difference of the focus evaluation values at the plurality of focal positions.

In one exemplary embodiment, the second mode is applied when a difference between a focus evaluation value in a focal position within a predetermined distance from a focal position having the highest focus evaluation value at the FOV and the highest focus evaluation value is within a predetermined range and the first mode is applied when a difference between a focus evaluation value in a focal position within a predetermined distance from a focal position having the highest focus evaluation value and the highest focus evaluation value is out of the predetermined range.

In one exemplary embodiment, in the step (b), the image generator generates a focus evaluation value for a plurality of images in different focal positions, acquired from any one of the plurality of FOVs and when the difference between the focus evaluation values of the plurality of images is within a predetermined range, the second mode is applied and when the difference between the focus evaluation values of the plurality of images is out of the predetermined range, the first mode is applied to generate the stitching target image.

According to the present disclosure, when a digital slide image for a sample of the slide is generated, a focus accuracy and a depth of the image may be improved.

Further, according to the present disclosure, when the slide image is acquired, the focal distance may be effectively adjusted during the capturing.

### BRIEF DESCRIPTION OF DRAWINGS

FIG. 1 is a view illustrating a schematic configuration of an image acquisition apparatus according to an exemplary embodiment of the present disclosure;
FIG. 2 is a view illustrating one embodiment (first mode) of generating a digital slide image using a plurality of images, in an image acquisition apparatus according to an exemplary embodiment of the present disclosure;
FIG. 3 is a view illustrating a method of adjusting a focal distance for capturing images at consecutive FOVs, in an image acquisition apparatus according to an exemplary embodiment of the present disclosure;
FIG. 4 is a view illustrating another embodiment (second mode) of generating a digital slide image using a plurality of images, in an image acquisition apparatus according to an exemplary embodiment of the present disclosure;
FIG. 5 is a view illustrating that a stitching target image generation mode is determined according to a pre-focus calculation result, in an image acquisition apparatus according to an exemplary embodiment of the present disclosure;
FIG. 6 is a view illustrating that a stitching target image generation mode is determined while acquiring an image, in an image acquisition apparatus according to an exemplary embodiment of the present disclosure; and
FIG. 7 is a flowchart illustrating an image acquiring method according to an exemplary embodiment of the present disclosure.

### DETAILED DESCRIPTION OF THE EMBODIMENT

Those skilled in the art may make various modifications to the present disclosure and the present disclosure may have various embodiments thereof, and thus specific embodiments will be illustrated in the drawings and described in detail in detailed description. However, this does not limit the present disclosure within specific exemplary embodiments, and it should be understood that the present disclosure covers all the modifications, equivalents and replacements within the spirit and technical scope of the present disclosure. In describing the present disclosure, when it is determined that a detailed description of related well-known technology may obscure the gist of the present disclosure, the detailed description thereof will be omitted.

Terms such as first or second may be used to describe various components but the components are not limited by the above terms. The above terms are used only to discriminate one component from the other component.

Terms used in the following description are used to describe a specific exemplary embodiment but are not intended to limit the present disclosure. Terminologies used in the specification are selected from general terminologies which are currently and widely used as much as possible while considering a function in the present disclosure, but the terminologies may vary in accordance with the intention of those skilled in the art, custom, or appearance of new technology. Further, in particular cases, the terms are arbitrarily selected by an applicant and in this case, the meaning thereof may be described in a corresponding section of the description of the disclosure. Therefore, the terminology used in the specification is analyzed based on a substantial meaning of the terminology and the specification rather than a simple title of the terminology.

A singular form may include a plural form if there is no clearly opposite meaning in the context. In the present application, it should be understood that term "include" or "have" indicates that a feature, a number, a step, an operation, a component, a part or the combination thereof described in the specification is present, but do not exclude a possibility of presence or addition of one or more other features, numbers, steps, operations, components, parts or combinations, in advance.

Hereinafter, exemplary embodiments according to the present disclosure will be described in detail with reference to the accompanying drawings, and the same or corresponding constituent elements are denoted by the same reference numerals regardless of a sign of the drawing, and repeated description thereof will be omitted.

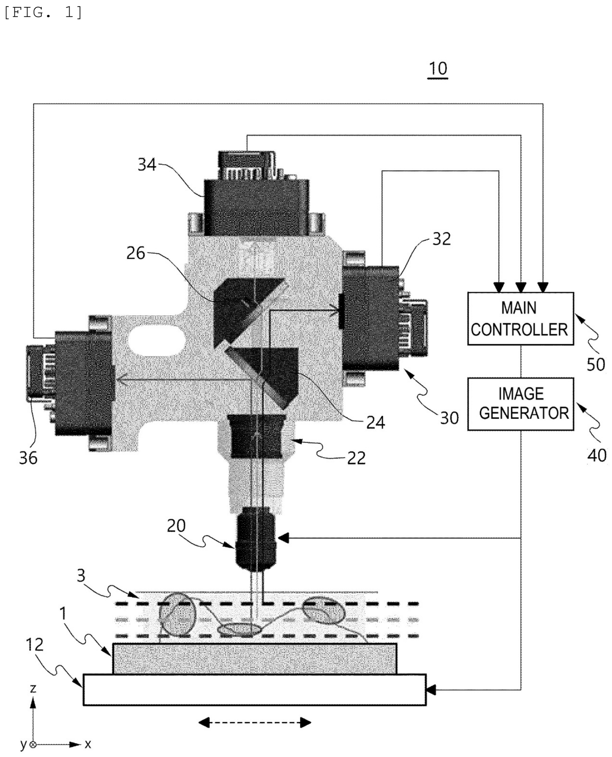

FIG. 1 is a view illustrating a schematic configuration of an image acquisition apparatus according to an exemplary embodiment of the present disclosure.

An image acquisition apparatus 10 according to an exemplary embodiment of the present disclosure includes a stage 12 on which a slide 1 with a sample 3 loaded thereon to be scanned is mounted, lenses 20 and 22 to which light from the sample 3 is input, beam splitters 24 and 26 which split and output light passing through the lenses 20 and 22, an image sensor unit 30 which acquires an image of a sample from the light split by the beam splitters 24 and 26, an image generator 50 which generates a digital slide image using an image acquired in the image sensor unit 30, and a main controller 40 which controls an operation of the apparatus.

The lenses 20 and 22 includes an objective lens which is disposed to be opposite to the sample 3 and a tube lens 22 for forming an image.

The image sensor unit 30 includes at least two image sensors 32, 34, and 36 which acquire images at different focal distances from the sample 3. In one exemplary embodiment, the image sensor unit 30 includes a first image sensor 32 which acquires an image at a first focal distance z1, a second image sensor 34 which acquires an image at a second focal distance z2, and a third image sensor 36 which acquires an image at a third focal distance z3. Further, the beam splitters 24 and 26 include a first beam splitter 24 and a second beam splitter 26 to transmit the image from the sample 3 to the first to third image sensors 32, 34, and 36.

The main controller 40 moves a stage 12 in an X-axis or/and a Y-axis direction to acquire an image for the sample 3 according to sequential fields of view (FOV). However, in the exemplary embodiment of the present disclosure, the stage 12 may be fixed and the lenses 20 and 22 may be configured to move relativeto the stage 12. Further, the main controller 40 may move the objective lens 20 to the Z-axis direction to adjust the focal distance.

The image sensor unit 30 of the image acquisition apparatus 10 illustrated in FIG. 1 includes three image sensors, first to third image sensors 32, 34, and 36 to acquire a plurality of images at different focal distances in one FOV.

In such an exemplary embodiment, a process of generating a digital slide image using a plurality of images acquired in the image sensor unit 30 will be described.

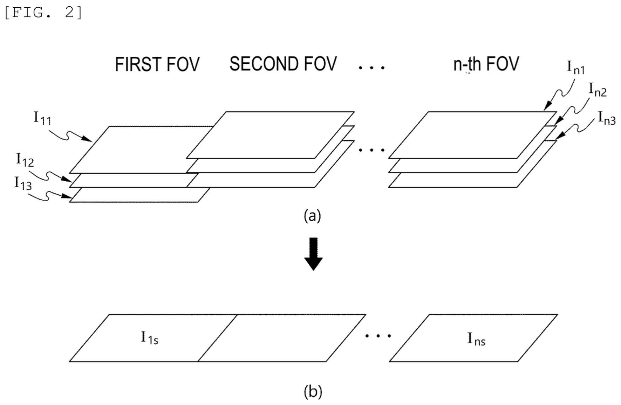

FIG. 2 is a view illustrating one embodiment (first mode) of generating a digital slide image using a plurality of images, in an image acquisition apparatus according to an exemplary embodiment of the present disclosure.

The first mode illustrated in FIG. 2 is referred to as a "best focus mode". In the first mode, at the corresponding FOV, an image having the most excellent focus, among a plurality of images acquired by the image sensor unit 30, is selected. An image selected at each FOV is used for stitching for generating a digital slide image.

When at the first FOV, 1-1-th to 1-3-th images I₁₁, I₁₂, and I₁₃ are acquired by the first to third image sensors 32, 34, and 36, the image generator 50 determines one image having the best focus evaluation value, among the 1-1-th to 1-3-th images I₁₁, I₁₂, and I₁₃, as a first stitching target image I₁ₛ. With respect to subsequent second FOV to n-th FOV, one image with the best focus evaluation value is determined as a stitching target image by the same method. That is, when n-1-th to n-3-th images Iₙ₁, Iₙ₂, and Iₙ₃ are acquired at the n-th FOV, the image generator determines one image with the best focus evaluation value as an n-th stitching target image Iₙₛ.

The image generator 50 stitches first to n-th stitching target images I₁ₛ to Iₙₛ at FOVs for a predetermined area or all areas for generating a digital slide image to generate a digital slide image. According to the exemplary embodiment, a stitching process of stitching target images is performed after determining a stitching target image at at least two consecutive FOVs or a stitching process is performed after determining stitching target images at all FOVs.

In one exemplary embodiment, a focus evaluation value for each of the plurality of images acquired at each FOV is calculated based on an image quality of image, whether the focus matches, or whether to include an object of interest. As the focus evaluation value, Brenner gradient, Tenenbaum gradient, and an energy laplace may be used. The focus evaluation value may be calculated for the entire area of the corresponding image or some area of interest. For example, if a cell nucleus in the sample is the object of interest, the cell nucleus is sensed and the focus evaluation value of the image is calculated based on the cell nucleus to acquire image having the optimal sharpness for the area of interest. Further, depending on whether there is an object of interest, the focus evaluation value may be increased or decreased.

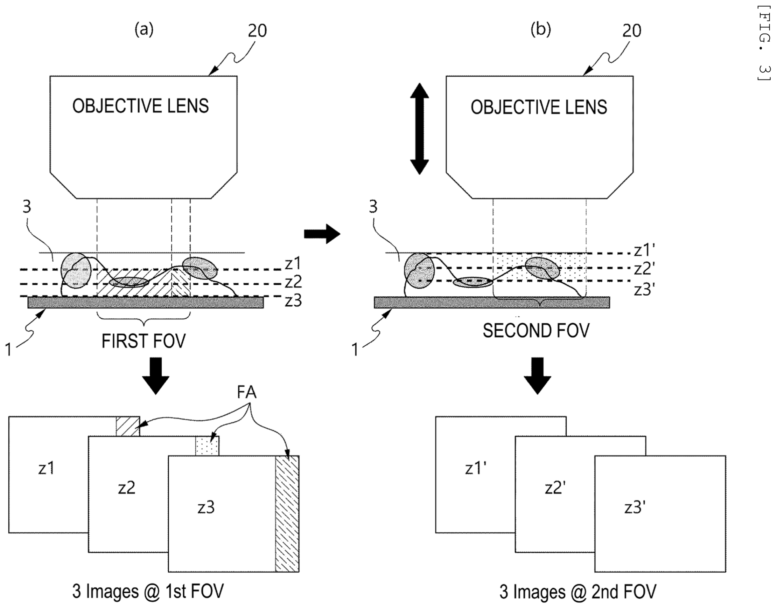

FIG. 3 is a view illustrating a method of adjusting a focal distance for capturing images at consecutive FOVs, in an image acquisition apparatus according to an exemplary embodiment of the present disclosure.

Referring to part (a) of FIG. 3, a plurality of images for focal positions z1, z2, and z3 at the first FOV is acquired by the first to third image sensors 32, 34, and 36. Some consecutive areas at the second FOV, among images acquired at the first FOV, are utilized as a focus calculation area FA. The main controller 40 evaluates a focus of the image in the focus calculation area FA and calculates the focal distance at the second FOV to adjust the objective lens 20. Referring to part (b) of FIG. 3, a z-axis height of the objective lens 20 is adjusted to acquire images in the focal positions z1', z2', and z3' at the second FOV.

In one exemplary embodiment, the second FOV may be continuous with the first FOV or partially overlaps the first FOV. When the cell or tissue belonging to the focus calculation area FA of the first FOV is captured, the second FOV is set to include the focus calculation area FA of the first FOV. By using this, the focus for capturing the cell or the tissue included in the sample 3 may be adjusted without including a separate camera or image sensor for calculating the focus.

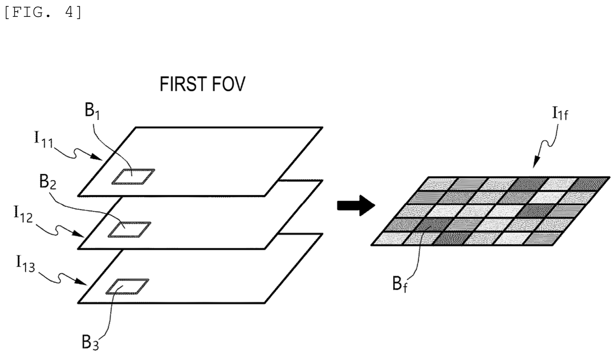

FIG. 4 is a view illustrating another embodiment (second mode) of generating a digital slide image using a plurality of images, in an image acquisition apparatus according to an exemplary embodiment of the present disclosure.

The second mode illustrated in FIG. 4 is referred to as a "focus fusion mode". In the second mode, the plurality of images acquired by the image sensor unit 30 at one FOV is analyzed in a predetermined unit to select a block image with an excellent image quality in the predetermined unit and fuses the selected block images to generate a stitching target image at the corresponding FOV. When the second mode is applied, at one FOV, it is advantageous in that a block which is satisfactorily focused or includes a cell or tissue of interest is selected from the plurality of images according to different focal distances to improve the depth of the digital slide image.

Referring to FIG. 4, when 1-1-th to 1-3-th images I₁₁, I₁₂, and I₁₃ are acquired by the first to third image sensors 32, 34, and 36 at the first FOV, the image generator 50 splits each of the 1-1-th to 1-3-th images I₁₁, I₁₂, and I₁₃ in a predetermined unit of blocks to evaluate the images in the unit of blocks.

For example, in the case of a first block image B₁, a second block image B₂, and a third block image B₃ in the same position on the X-Y plane in the 1-1-th to 1-3-th images I₁₁, I₁₂, and I₁₃, the image generator 50 determines a block image with the best image quality, among three block images B₁, B₂, and B₃ as a stitching target block B_{f}.

When the stitching target block for all the block images at the first FOV is determined, the stitching target blocks are fused to generate a first stitching target image I_{1f}.

A predetermined unit for splitting the images into blocks may be a predetermined number of pixels (for example, 1X1, 4X4, 8X8, 16X16 or 32X32) and the image quality in the block image which is split in the predetermined unit may be determined by a focus evaluation value or whether there is a cell or tissue of interest. Further, in the exemplary embodiment of the present disclosure, the predetermined unit for splitting the image into blocks may be determined based on a specific shape included in the 1-1-th to 1-3-th images I₁₁, I₁₂, and I₁₃. For example, the 1-1-th to 1-3-th images I₁₁, I₁₂, and I₁₃ are segmented for the specific tissue or cell to determine an area in which the specific tissue or cell is present as the stitching target block.

Further, in the exemplary embodiment of the present disclosure, the stitching target block B_{f} may be generated by applying a weight to the first block image B₁, the second block image B₂, and the third block image B₃ in the same location on the X-Y plane in the 1-1-th to 1-3-th images I₁₁, I₁₂, and I₁₃. For example, when a weight w1 is assigned to the first block image B₁, a weight w2 is applied to the second block image B₂, and a weight w3 is applied to the third block image B₃ depending on the image quality, a value of each pixel of the stitching target block B_{f} may be determined by [(a pixel value of the first block image B₁ X w1) + (a pixel value of the second block image B₂ X w2) + (a pixel value of the third block image B₃ X w3)].

In one exemplary embodiment, with respect to other FOVs continuous with the first FOV, the stitching target image is generated by applying the fusion method as illustrated in FIG. 4. The image generator 50 stitches first to n-th stitching target images I_{1f} to I_{nf} at FOVs for a predetermined area or all the areas for generating the digital slide image to generate a digital slide image.

In the exemplary embodiment of the present disclosure, the image generator 50 generates the digital slide image according to the first mode or the second mode. Further, the image generator 50 generates the digital slide image using both the first mode and the second mode.

According to the exemplary embodiment, a user inputs any one of the first mode or the second mode to the main controller 40 as a method for generating the digital slide image. In some cases, the user may set both first mode and the second mode to generate the digital slide image.

In one exemplary embodiment, the main controller 40 automatically selects whether to apply the first mode or the second mode.

In one exemplary embodiment, a mark for applying the first mode or the second mode is provided on the slide 1. The main controller 40 recognizes the mark displayed on the slide 1 by the image sensor 30 and determines the stitching target image for generating the digital slide image according to the first mode or the second mode. The mark is provided on the slide 1 as a letter, a figure, or a two-dimensional code.

In one exemplary embodiment, the image acquisition apparatus 10 performs a pre-focus calculating step for a sample 3 loaded on the slide 1 as a preparation step of performing the slide scanning. In the pre-focus calculating step, if a difference between focus evaluation values in different focal distances at a specific FOV is within a predetermined range, the stitching target image may be generated for the corresponding FOV according to the second mode.

In one exemplary embodiment, the image acquisition apparatus 100 selectively uses the first mode or the second mode during the process of sequentially setting the FOV for the slide and generating the stitching target image at the corresponding FOV.

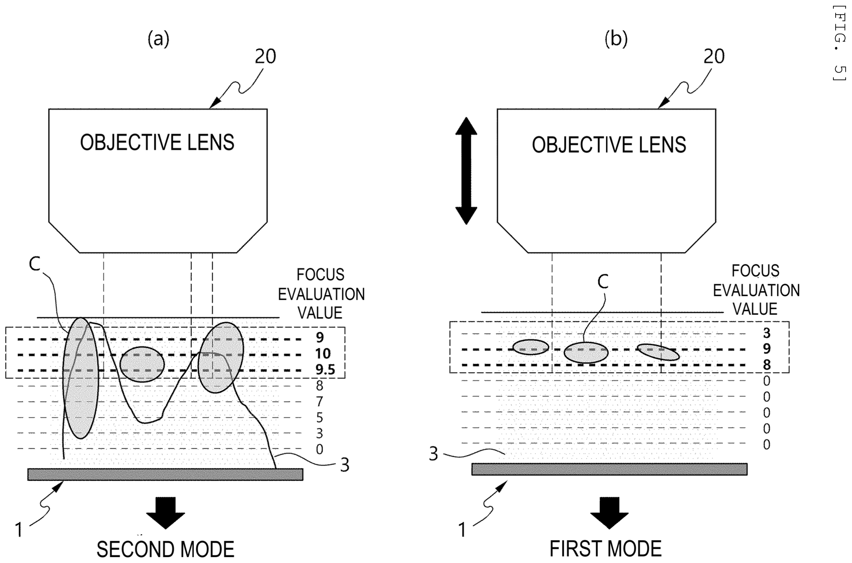

FIG. 5 is a view illustrating that a stitching target image generation mode is determined according to a pre-focus calculation result, in an image acquisition apparatus according to an exemplary embodiment of the present disclosure.

In part (a) and part (b) of FIG. 5, the focus evaluation value is illustrated according to the focal distance at the specific FOV and the focus evaluation value is assigned as 0 to 10.

In part (a) of FIG. 5, tissues or cells C in a sample 3 are widely distributed in the Z-axis direction so that a difference between a focus evaluation value in the focal location having the highest focus evaluation value and a focus evaluation value in a focal location within a predetermined distance from the focal position with the highest focus evaluation value is not large. That is, a difference between the highest focus evaluation value and the focus evaluation value in a focal location within a predetermined distance from the focal position with the highest focus evaluation value is within a predetermined range. This represents that the tissues or cells C are widely distributed in the Z-axis direction in the sample 3. In this case, the second mode is applied so that the cells or tissues are represented in the stitching target image as much as possible.

In part (b) of FIG. 5, tissues or cells C in the sample 3 are concentrated in a specific location in the Z-axis direction so that a difference between a focus evaluation value at the highest focal location and a focus evaluation value in a focal location within a predetermined distance from the focal position with the largest focus evaluation value is large. That is, a difference from the focus evaluation value in a focal position within a predetermined distance from the focal position with the highest focus evaluation value is out of the predetermined range. This represents that the tissue or cell C is concentrated in a predetermined depth in the Z-axis direction in the sample 3 and in this case, the first mode is applied to determine an image with the best focus evaluation value as the stitching target image.

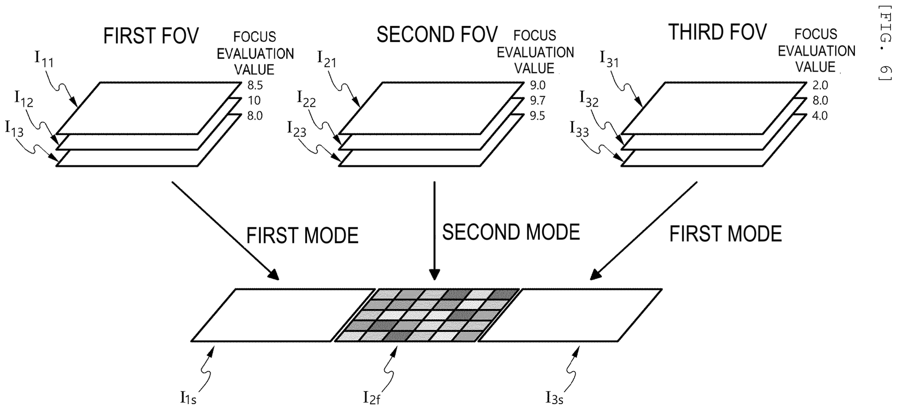

FIG. 6 is a view illustrating that a stitching target image generation mode is determined while acquiring an image, in an image acquisition apparatus according to an exemplary embodiment of the present disclosure.

In FIG. 6, images are sequentially acquired from the first FOV to the third FOV.

At the first FOV, the 1-1-th to 1-3-th images I₁₁, I₁₂, and I₁₃ are acquired by the first to third image sensors 32, 34, and 36 and the focus evaluation value for each image is calculated. A focus evaluation value of the 1-2-th image I₁₂ is 10 and focus evaluation values of the 1-1-th image I₁₁ and the 1-3-th image I₁₃ are 8.5 and 8.0, respectively. If the difference between focus evaluation values of images is equal to or larger than a predetermined value (for example, 1.0 or larger), the first mode of determining an image with the highest focus evaluation value as a stitching target image is applied. Accordingly, at the first FOV, the first stitching target image I₁ₛ is determined as a stitching target image for a digital slide image according to the first mode.

At the second FOV, the 2-1-th to 2-3-th images I₂₁, I₂₂, and I₂₃ are acquired by the first to third image sensors 32, 34, and 36 and the focus evaluation value for each image is calculated. A focus evaluation value of the 2-2-th image I₂₂ is 9.7 and focus evaluation values of the 2-1-th image I₂₁ and the 2-3-th image I₂₃ are 9.0 and 9.5, respectively. If the difference between focus evaluation values of images is equal to or larger than a predetermined value (for example, smaller than 1.0), blocks are evaluated in a predetermined unit to determine the stitching target block and the second mode of determining a stitching target image by fusing the stitching target blocks is applied. Accordingly, at the second FOV, the second stitching target image I_{1f} is determined as a stitching target image for a digital slide image according to the second mode.

At the third FOV, the 3-1-th to 3-3-th images I₃₁, I₃₂, and I₃₃ acquired by the first to third image sensors 32, 34, and 36 have the large difference between focus evaluation values of images so that the first mode is applied to determine a third stitching target image I₃ₛ.

The first stitching target image I₁ₛ, the second stitching target image I_{2f}, and the third stitching target image I₃ₛ are continuously stitched to be combined as a digital slide image.

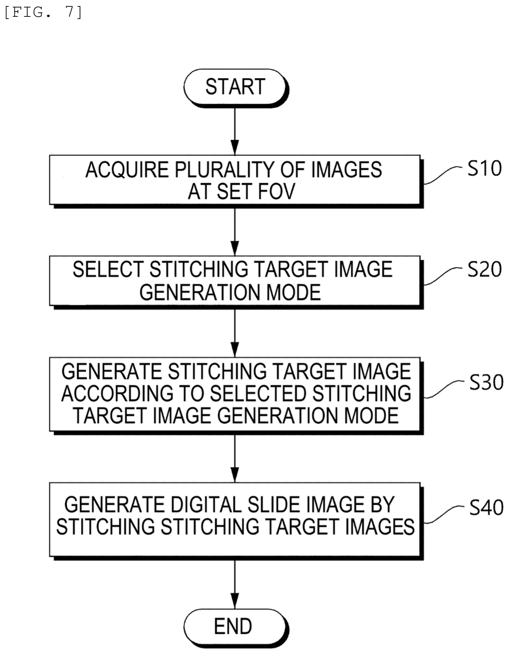

FIG. 7 is a flowchart illustrating an image acquiring method according to an exemplary embodiment of the present disclosure. An image acquisition apparatus 10 for acquiring a slide image acquires a plurality of images using an image sensor unit 30 at a set FOV in step S10. In one exemplary embodiment, the image sensor unit includes first to third image sensors 32, 34, and 36 and acquires three images according to different focal distances at one FOV.

A stitching target image generation mode for generating a stitching target image used to stitch a plurality of images acquired at the corresponding FOV is selected in step S20. The stitching target image generation mode is selected by the user or is determined by the image generator 50 of the image acquisition apparatus 10 by a focus evaluation value calculation result of a pre-focus calculation process and a focus evaluation value result according to the focal distance at each FOV.

The stitching target image generation mode includes a first mode of selecting an image having the highest focus evaluation value, among the plurality of images at the corresponding FOV, as the stitching target image and a second mode of dividing the plurality of images at the corresponding FOV and calculating a focus evaluation value for the divided block image and fusing block images with the highest focus evaluation value to select as a stitching target image.

The image generator 50 of the image acquisition apparatus 10 generates the stitching target image at the corresponding FOV according to the selected stitching target image generation mode in step S30.

The stitching target image at a plurality of FOVs is generated and the image generator 50 stitches the stitching target images at the plurality of FOVs to generate a digital slide image in step S40.

The apparatus according to the exemplary embodiments of the present disclosure includes a processor, a permanent storage which stores and executes program data such as a memory or a disk driver, a communication port which communicates with the external device, and a user interface such as a key or a button. Methods which are implemented by a software module or an algorithm may be computer readable codes or program instructions which are executable on the processor and stored on a computer readable recording medium. Here, the computer readable recording medium may include a magnetic storage medium such as a read only memory (ROM), a random access memory (RAM), a floppy disk, and hard disk and an optical reading medium such as CD-ROM or digital versatile disc (DVD).

The computer readable recording medium is distributed in computer systems connected through a network so that computer readable code is stored therein and executed in a distributed manner. The medium is readable by the computer, is stored in the memory, and is executed in the processor.

Exemplary embodiments of the present disclosure may be represented with functional block configurations and various processing steps. The functional blocks may be implemented by various numbers of hardware and/or software configurations which execute specific functions. For example, the exemplary embodiment may employ integrated circuit configurations such as a memory, a processing, a logic, or a look-up table in which various functions are executable by the control of one or more microprocessors or the other control devices. Similar to execution of the components of the present disclosure with software programming or software elements, the exemplary embodiment may be implemented by programming or scripting languages such as C, C++, Java, assembler including various algorithms implemented by a combination of data structures, processes, routines, or other program configurations. The functional aspects may be implemented by an algorithm executed in one or more processors. Further, the exemplary embodiment may employ the related art for the electronic environment setting, signal processing and/or data processing. The terms such as "mechanism", "element", "unit", and "configuration" are broadly used and are not limited to mechanical and physical configurations. The terms may include meaning of a series of routines of a software in association with the processor.

Specific executions described in the exemplary embodiments are examples, so that the range of the exemplary embodiment is not limited by any way. For simplicity of the specification, the description of another functional aspects of the electronic configurations, control systems, software, and the systems of the related art may be omitted. Further, connections of components illustrated in the drawing with lines or connection members illustrate functional connection and/or physical or circuit connections. Therefore, in the actual apparatus, it is replaceable or represented as additional various functional connections, physical connections, or circuit connections. Unless specifically stated as "essential", "importantly", it may not be an essential configuration to apply the present disclosure.

The above description illustrates a technical spirit of the present invention as an example and various changes, modifications, and substitutions become apparent to those skilled in the art within a scope of an essential characteristic of the present invention. Therefore, as is evident from the foregoing description, the exemplary embodiments and accompanying drawings disclosed in the present disclosure do not limit the technical spirit of the present disclosure and the scope of the technical spirit is not limited by the exemplary embodiments and accompanying drawings. The protective scope of the present disclosure should be construed based on the following claims, and all the technical concepts in the equivalent scope thereof should be construed as falling within the scope of the present disclosure.

## Claims

1. A slide image acquisition apparatus, comprising:
a stage on which a slide with a sample thereon is mounted;
a lens which receives light from the sample;
a beam splitter which splits the light incident through the lens into at least two to transmit the split light;
at least two image sensor units which acquire images of the sample in different focal positions from light transmitted from the beam splitter, with respect to each field of view (FOV) for the sample; and
an image generator which generates a stitching target image using at least two images at each FOV generated by the image sensor unit and generates a composite image by composing the stitching target images at the plurality of FOVs,
wherein the image generator includes any one of a first mode of selecting any one of at least two images at any one FOV as the stitching target image and a second mode of dividing at least two images at any one FOV into block images and generating the stitching target image using the block images in the same position.

2. The slide image acquisition apparatus of claim 1, wherein in the first mode, the image generator calculates a focus evaluation value for at least two images at each FOV and selects an image with a higher focus evaluation value as the stitching target image.

3. The slide image acquisition apparatus of claim 1, wherein in the second mode, the image generator calculates a focus evaluation value for the block images in the same position at any one FOV, generates the stitching target block for the block images using the focus evaluation value, and fuses the stitching target blocks at the FOV to generate the stitching target image.

4. The slide image acquisition apparatus of claim 3, wherein the image generator determines a block image having the highest focus evaluation value, among the block images, as the stitching target block.

5. The slide image acquisition apparatus of claim 3, wherein the image generator determines weights for the block images using the focus evaluation value for the block images and composes the block images using the weights to generate the stitching target block.

6. The slide image acquisition apparatus of claim 1, wherein whether to apply the first mode or the second mode is selected by the user or determined by a mark provided on the slide.

7. The slide image acquisition apparatus of claim 1, wherein the image generator applies the first mode to any one FOV, among the plurality of FOVs, and applies the second mode to the other FOV, to generate the stitching target image.

8. The slide image acquisition apparatus of claim 7, further comprising:
a main controller which controls operations of the stage, the lens, the image sensor units, and the image generator,
wherein the main controller performs a pre-focus calculation step of calculating a focus distribution of the sample of the slide to acquire the image for the slide and
in the focus calculation step, a focus evaluation value in a plurality of focal positions at any one FOV is calculated and whether to apply the first mode or the second mode is determined according to the difference of the focus evaluation values at the plurality of focal positions.

9. The slide image acquisition apparatus of claim 8, wherein the second mode is applied when a difference between a focus evaluation value in a focal position within a predetermined distance from a focal position having the highest focus evaluation value at the FOV and the highest focus evaluation value is within a predetermined range and
the first mode is applied when the difference between the focus evaluation value in the focal position within the predetermined distance from the focal position having the highest focus evaluation value and the highest focus evaluation value is out of the predetermined range.

10. The slide image acquisition apparatus of claim 7, wherein the image generator generates a focus evaluation value for a plurality of images in different focal positions, acquired from any one of the plurality of FOVs and
when the difference between the focus evaluation values of the plurality of images is within a predetermined range, the second mode is applied and when the difference between the focus evaluation values of the plurality of images is out of the predetermined range, the first mode is applied to generate the stitching target image.

11. A slide image acquisition method of generating a digital slide image by composing images acquired at a plurality of fields of view (FOV) for a sample mounted on a slide, the method comprising the steps of:
(a) receiving a plurality of images at different focal positions for each FOV, by an image generator;
(b) generating a stitching target image at each FOV using the plurality of images at each FOV, by the image generator; and
(c) generating the digital slide image by composing the stitching target images, by the image generator,
wherein in the step (b), the image generator generates the stitching target image according to any one of a first mode of selecting any one of a plurality of images at any one FOV as the stitching target image and a second mode of dividing the plurality of images at any one FOV into block images and generating the stitching target image using the block images in the same position.

12. The slide image acquisition method of claim 11, wherein in the first mode, the image generator calculates a focus evaluation value for at least two images at each FOV and selects an image with a higher focus evaluation value as the stitching target image.

13. The slide image acquisition method of claim 11, wherein in the second mode, the image generator calculates a focus evaluation value for the block images in the same position at any one FOV, generates the stitching target block for the block images using the focus evaluation value, and fuses the stitching target blocks at the FOV to generate the stitching target image.

14. The slide image acquisition method of claim 13, wherein the image generator determines a block image having the highest focus evaluation value, among the block images, as the stitching target block.

15. The slide image acquisition method of claim 13, wherein the image generator determines weights for the block images using the focus evaluation value for the block images and composes the block images using the weights to generate the stitching target block.

16. The slide image acquisition method of claim 13, wherein prior to the step (a), a pre-focus calculation step of calculating a focus distribution of the sample of the slide is performed to acquire the image for the slide,
in the focus calculation step, a focus evaluation value in a plurality of focal positions at any one FOV is calculated, and in the step (b), whether to apply the first mode or the second mode is determined according to the difference of the focus evaluation values at the plurality of focal positions.

17. The slide image acquisition method of claim 16, wherein the second mode is applied when a difference between a focus evaluation value in a focal position within a predetermined distance from a focal position having the highest focus evaluation value at the FOV and the highest focus evaluation value is within a predetermined range and
the first mode is applied when the difference between a focus evaluation value in a focal position within a predetermined distance from a focal position having the highest focus evaluation value at the FOV and the highest focus evaluation value is out of the predetermined range.

18. The slide image acquisition method of claim 11, wherein in the step (b), the image generator generates a focus evaluation value for a plurality of images in different focal positions, acquired from any one of the plurality of FOVs and when the difference between the focus evaluation values of the plurality of images is within a predetermined range, applies the second mode and when the difference between the focus evaluation values of the plurality of images is out of the predetermined range, applies the first mode to generate the stitching target image.
